Europäisches Patentamt

European Patent Office

Office européen des brevets

(11) Numéro de publication : **0 014 298**
**B1**

(19)

(12) **FASCICULE DE BREVET EUROPÉEN**

(45) Date de publication du fascicule du brevet :
**05.10.83**

(21) Numéro de dépôt : **79401008.2**

(22) Date de dépôt : **12.12.79**

(51) Int. Cl.³ : **B 61 B 13/14**, B 65 G 23/38

(54) **Transporteur sans fin à vitesses localement différentes et application aux trottoirs roulants.**

(30) Priorité : **13.12.78 FR 7835106**

(43) Date de publication de la demande :
**20.08.80 Bulletin 80/17**

(45) Mention de la délivrance du brevet :
**05.10.83 Bulletin 83/40**

(84) Etats contractants désignés :
**AT BE CH DE GB IT NL SE**

(56) Documents cités :
**CH A 397 999**
**FR A 1 535 764**
**GB A 1 273 561**

(73) Titulaire : **Cesbron Lavau, René**
**22 rue de Verneuil**
**F-75007 Paris (FR)**

(72) Inventeur : **Cesbron Lavau, René**
**22 rue de Verneuil**
**F-75007 Paris (FR)**

(74) Mandataire : **Boukhors, Alain et al**
**Cabinet BEAU de LOMENIE 55, Rue d'Amsterdam**
**F-75008 Paris (FR)**

Jouve, 18, rue St-Denis, 75001 Paris, France

## Transporteur sans fin à vitesses localement différentes et application aux trottoirs roulants

La présente invention concerne un transporteur sans fin à vitesses localement différentes, du type comportant : un ensemble linéaire sans fin ayant un brin, dit de travail, destiné à recevoir les corps à transporter, cet ensemble étant formé d'une succession d'éléments, dits de transport, d'espacements variables guidés suivant un trajet en boucle fermée ; au moins un dispositif de dilatation-contraction placé en poste fixe et destiné à faire varier l'espacement entre des éléments de transport voisins sur au moins un tronçon dit régulé du parcours dudit ensemble linéaire ; et des moyens moteurs pour entraîner ledit ensemble linéaire en défilement.

Dans des transporteurs connus de ce type CH-A-397 999 et GB-A-1 273 561), le ou les dispositifs de dilatation-contraction font partie intégrante de l'ensemble linéaire sans fin ; ils s'étendent donc sur la totalité de la longueur de cet ensemble sans fin et il en résulte une complication et un alourdissement de cet ensemble, rendant ces transporteurs connus onéreux et d'entretien difficile.

L'invention remédie à cet inconvénient et a notamment pour but de proposer un transporteur sans fin à vitesse localement différentes qui soit de conception simple et de fabrication et d'entretien peu onéreux.

Ce but est atteint, conformément à l'invention, du fait que ledit dispositif de dilatation-contraction est distinct dudit ensemble linéaire sans fin et est formé d'une suite d'éléments dits de préhension guidés sur un trajet en boucle fermée dont un tronçon, dit de coïncidence, coïncide avec le tronçon régulé du parcours des éléments dudit ensemble linéaire, chaque élément de préhension étant apte à saisir un élément de transport, chaque élément de préhension, dit premier élément, étant relié à l'un des éléments de préhension voisins, dit élément précédent, par un dispositif de liaison réglant, suivant un programme pré-établi, l'écartement entre ces deux éléments de préhension en fonction de la position dudit premier élément, de telle sorte que cet écartement diminue progressivement dans une première zone du tronçon de coïncidence et augmente progressivement dans une deuxième zone dudit tronçon, située en aval de la première zone.

Avantageusement, l'ensemble linéaire sans fin comporte des moyens mécaniques de liaison pour déterminer la valeur maximale de l'espacement entre les éléments de transport voisins ; cet espacement est avantageusement maximal en dehors du tronçon régulé.

Avantageusement, il y a deux dispositifs de dilatation-contraction associés chacun à un tronçon régulé respectif de l'ensemble linéaire sans fin, chacun de ces tronçon régulés étant placé à proximité d'une extrémité respective du brin de travail de l'ensemble linéaire sans fin.

Avantageusement, lesdits moyens moteurs comprennent un tambour d'extrémité sur lequel est monté ledit ensemble linéaire sans fin, ce tambour étant entraîné positivement en rotation autour de son axe.

Avantageusement, entre lesdites première et deuxième zones, se trouve une troisième zone dans laquelle l'écartement entre les éléments de préhension reste constant.

Avantageusement, le dispositif de liaison reliant entre eux deux éléments de préhension voisins comprend, de façon connue en soi par le FR-A-1 535 764, une chaîne qui est attachée à une extrémité au premier élément, soi, une chaîne qui est attachée à une extrémité au premier élément, qui passe autour d'un pignon fou de l'élément précédent et qui est attachée à son autre extrémité sur un élément auxiliaire guidé sur un trajet prédéterminé en boucle fermée, ce trajet suivant sensiblement le trajet des éléments de préhension, l'écartement entre les deux trajets étant non uniforme sur au moins une partie du tronçon de coïncidence, une bielle rigide reliant, d'une part, l'élément auxiliaire et, d'autre part, ledit premier élément.

Avantageusement, un trottoir roulant est formé par le brin supérieur d'un tapis sans fin comprenant une succession d'axes transversaux rigides reliés entre eux par des moyens mécaniques de liaison permettant la variation de l'écartement de deux axes voisins entre deux valeurs limites, et le brin supérieur est associé à au moins deux dispositifs de dilatation-contraction placés à poste fixe, l'un à l'extrémité amont et, l'autre, à l'extrémité aval du trottoir roulant, les éléments de préhension de ces dispositifs étant chacun constitués par une fourche dont l'ouverture est apte à recevoir un axe du tapis.

Ainsi, dans ce transporteur, les dispositifs de dilatation-contraction sont distincts de l'ensemble linéaire sans fin destiné à porter les objets — ou personnes — à transporter. La structure générale du transporteur est donc simplifiée, et son entretien facilité.

De plus, il est à noter que, selon l'invention, les dispositifs de dilatation-contraction sont entraînés par l'ensemble linéaire sans fin lui-même qui agit, de façon uniforme et synchrone, sur toute la longueur du tronçon de coïncidence ; ceci permet d'éviter tout risque de coincement des dispositifs de dilatation-contraction.

D'autres caractéristiques et avantages de l'invention seront mieux compris à la lecture de la description qui va suivre d'un exemple de réalisation et en se référant aux dessins annexés dans lesquels :

la figure 1 est une vue en élévation et en coupe verticale longitudinale d'un trottoir roulant utilisant des dispositifs de dilatation-contraction selon un mode de réalisation de l'invention ;

la figure 2 est une vue latérale en élévation d'un dispositif de dilatation-contraction utilisé dans le trottoir roulant de la figure 1 ;

la figure 3 est une vue partielle en perspective du trottoir roulant de la figure 1 ;

la figure 4 est une vue partielle en perspective à plus grande échelle de la figure 3 ; et

la figure 5 est une vue analogue à la figure 4 montrant un autre mode de réalisation.

Le trottoir roulant représenté sur les dessins comprend un ensemble linéaire sans fin réalisé sous forme de tapis sans fin 1, à deux brins superposés 1a, et 1b, le brin supérieur 1a constituant le trottoir roulant proprement dit.

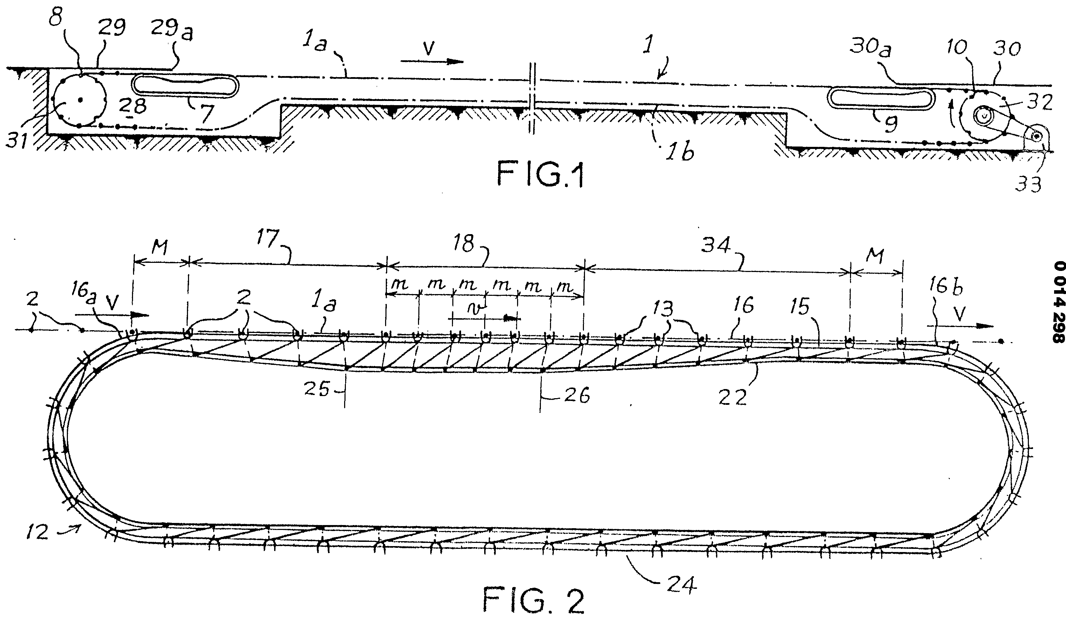

La toile — ou bande — du tapis sans fin est constituée par une succession d'éléments de transport réalisés sous forme d'axes rigides transversaux 2 munis chacun, à chaque extrémité, d'un galet 3 roulant sur une voie de roulement fixe 4. Chaque axe 2 est relié à l'axe précédent par plusieurs moyens mécaniques de liaison réalisés sous forme de lames rigides verticales 5 allongées dans le sens de l'axe longitudinal de la toile. Chaque lame 5 est articulée autour dudit axe 2 et elle présente, à son extrémité opposée à cette articulation, une lumière longitudinale 6 qui est traversée par l'axe 2 précédent, cet axe pouvant coulisser le long de cette lumière 6 sans jeu transversal vertical. Chaque axe 2 peut ainsi être déplacé par rapport à l'axe 2 précédent entre une position pour laquelle l'écartement entre les axes est minimal « m » et une position pour laquelle l'écartement entre les axes est maximal « M » (figure 2).

Le brin supérieur 1a du tapis sans fin 1 est associé à deux dispositifs dits de contraction-dilatation, placés à poste fixe, l'un (7), à proximité et en aval de l'extrémité amont 8 dudit brin supérieur 1a du tapis sans fin 1 est associé à deux dispositifs dits de contraction-dilatation, placés à poste fixe, l'un (7), à proximité et en aval de l'extrémité amont 8 dudit brin supérieur 1a et, l'autre (9), à proximité et en amont de l'extrémité aval 10 de ce brin supérieur 1a.

Chaque dispositif 7, 9 a pour fonction de saisir chaque axe transversal 2, de le rapprocher progressivement de l'axe 2 voisin précédent jusqu'à ce que l'écartement entre lesdits axes soit minimal « m », puis de l'éloigner progressivement de cet axe précédent jusqu'à ce que ledit écartement soit maximal « M ».

A cet effet, chaque axe 2 dépasse latéralement à chacune de ses extrémités, en 11, la voie de roulement fixe 4 et la largeur de la bande du tapis 1, et chaque dispositif de contraction-dilatation 7, 9 comprend deux ensembles sans fin, tels que 12, disposés latéralement de part et d'autre du brin supérieur 1a du tapis sans fin 1.

Chaque ensemble sans fin comprend une succession d'éléments de préhension réalisé sous forme de fourches 13 capables chacune de saisir dans son ouverture 13a une extrémité 11 adjacente d'un axe transversal 2. Chaque fourche 13 est munie de chaque côté d'une paire de galets 14 à boudin 14a roulant sur une voie de roulement et de guidage fixe 15 formant une boucle fermée et guidant ainsi chaque fourche 13 suivant un parcours fermé dont un brin supérieur 16 coïncide avec le trajet des extrémités d'axe 11 adjacentes lorsque les axes 2 parcourent le brin supérieur 1a.

La distance entre deux fourches 13 voisines est, à l'extrémité amont 16a dudit brin supérieur 16, égale à l'écartement maximal « M » entre deux axes transversaux 2 voisins du tapis sans fin 1. Cette distance diminue progressivement dans une zone d'extrémité amont 17 du brin 16 pour atteindre l'écartement minimal « m » entre deux axes 2 voisins, dans une zone médiane 18 du parcours dudit brin supérieur 16. Puis cette distance croît progressivement en aval de cette zone médiane 18 pour atteindre, à l'extrémité aval 16b du brin supérieur 16, la valeur maximale « M » de l'écartement entre deux axes 2 voisins (figure 2).

A cet effet, chaque fourche 13, dite première fourche, est reliée à la fourche 13 précédente par un dispositif mécanique de liaison réglant l'écartement entre ces fourches en fonction de la position de ladite première fourche sur le brin supérieur 16, suivant un programme préétabli.

Dans l'exemple représenté, ce dispositif de liaison comprend une chaîne-galle 19, qui est attachée, à une extrémité 19a, à ladite fourche 13, qui passe autour d'un pignon 20 monté fou sur la fourche 13 précédente, et qui est attachée, à son autre extrémité 19b, à un chariot auxiliaire 21 roulant, par l'intermédiaire de galets à boudin 21a, sur une voie de roulement fixe 22 qui est située sensiblement sur un même plan vertical que la voie de roulement 15 des fourches 13 et qui est décalée, par rapport à la voie de roulement 15, vers l'intérieur de la boucle fermée formée par ladite voie de roulement 15. Le dispositif mécanique de liaison est complété par une bielle rigide 23 articulée, d'une part, sur le chariot auxiliaire 21 et, d'autre part, sur ladite première fourche 13, par des articulations orthogonales au plan vertical déterminé par les voies de roulement 15 et 22.

L'écartement — ou espacement mesuré verticalement — entre lesdites voies de roulement 15 et 22 est sensiblement constant sur toute la longueur du brin inférieur 24 du parcours des fourches 13, mais, comme on peut le voir sur la figure 2, cet écartement varie, du côté adjacent au brin supérieur 16, de la façon suivante.

Cet écartement croît régulièrement depuis l'extrémité amont 16a du brin supérieur 16, jusqu'en un point 25 de ce brin, point à partir duquel cet écartement demeure constant jusqu'à un deuxième point 26 à partir duquel ledit écartement diminue progressivement jusqu'à l'extrémité aval 16b dudit brin supérieur 16.

On comprend qu'une augmentation de l'écartement entre les voies de roulement 15 et 22 entraîne un rapprochement entre elles de deux fourches 13 voisines concernées tandis qu'une diminution de cet écartement entraîne un éloignement de ces deux fourches 13 l'une de l'autre.

Comme on peut le voir sur la figure 1, le tapis sans fin est logé dans une cavité 28 et les extrémités amont 8 et aval 10 du brin supérieur 1a de ce tapis sont recouvertes par une plateforme fixe respective 29 et 30. Le bord libre 29a de la plate-forme d'entrée 29 est situé au droit de l'extrémité amont de la zone 18 du dispositif 7, tandis que l'extrémité libre 30a de la plate-forme de sortie 30 est située au droit de l'extrémité aval de la zone 18 du dispositif 9.

Le tapis sans fin 1 est monté sur deux tambours d'extrémité 31 et 32 dont l'un (31) est monté fou tandis que l'autre (32) est entraîné positivement en rotation par un moteur 33.

Les voies de roulement 15 et 22 sont chacune constituées, dans l'exemple représenté, par une paire de rails en U à ailes horizontales, rails tournant chacun l'ouverture du U vers celle de l'autre rail de la paire.

Selon l'exemple représenté sur la figure 2, la zone 17 de rapprochement progressif des fourches 13 est plus courte que la zone 34 d'éloignement progressif des fourches, cette zone 34 étant située immédiatement en aval de la zone 18.

La zone 17 étant destinée à être entièrement recouverte par la plate-forme d'entrée 29 (cas du dispositif 7) ou par la plate-forme de sortie 30 (cas du dispositif 9), il y a avantage à réduire au minimum sa longueur. La figure 2 représente une vue latérale à plus grande échelle du dispositif 7 représenté sur la figure 1. La vue latérale détaillée du dispositif 9 de la figure 1 se déduit de la figure 2 par une symétrie par rapport à un plan vertical transversal à la figure 2.

On remarquera que le sens de marche du trottoir roulant qui vient d'être décrit peut être inversé sans nécessiter aucune modification des dispositifs qui le constituent.

Selon une variante, le trottoir roulant comporte en outre au moins un dispositif de dilatation-contraction intermédiaire placé sur le brin 1a entre les dispositifs 7 et 9. Ce dispositif permet l'entrée et la sortie de personnes latéralement à l'endroit du trottoir situé au droit de la zone 18 de ce dispositif intermédiaire. Dans ce cas, les zones 17 et 34 ont avantageusement la même longueur.

Le trottoir roulant 1a diffère des appareils classiques aussi par la disposition adoptée pour les éléments articulés formant le plancher de ce trottoir, chacun de ces éléments étant constitué par toutes les lames 5 articulées sur un même axe 2, ces éléments étant agencés de telle façon que chacun d'eux peut s'encastrer partiellement dans l'élément voisin — ou le chevaucher — sous l'effet du rapprochement mutuel des axes 2.

Ainsi, le plancher du trottoir est entraîné à une vitesse V, supérieure à la vitesse habituelle v, par le tambour moteur 32 situé à l'extrémité aval et mû par le moteur 33, le renvoi étant assuré par le tambour libre 31 placé à l'autre extrémité du tapis sans fin 1.

Le rapprochement mutuel des axes 2 est obtenu par l'action des deux dispositifs 7, 9, conformes à l'invention et situés, respectivement, dans la zone d'entrée et de sortie du tapis 1, zone où la vitesse se trouve ainsi ramenée à la valeur habituelle v.

Ainsi, l'usager entre et sort dans des conditions normales par les plaques d'accès 29 et 30 qui prolongent le sol fixe jusqu'à la zone de vitesse réduite v du trottoir.

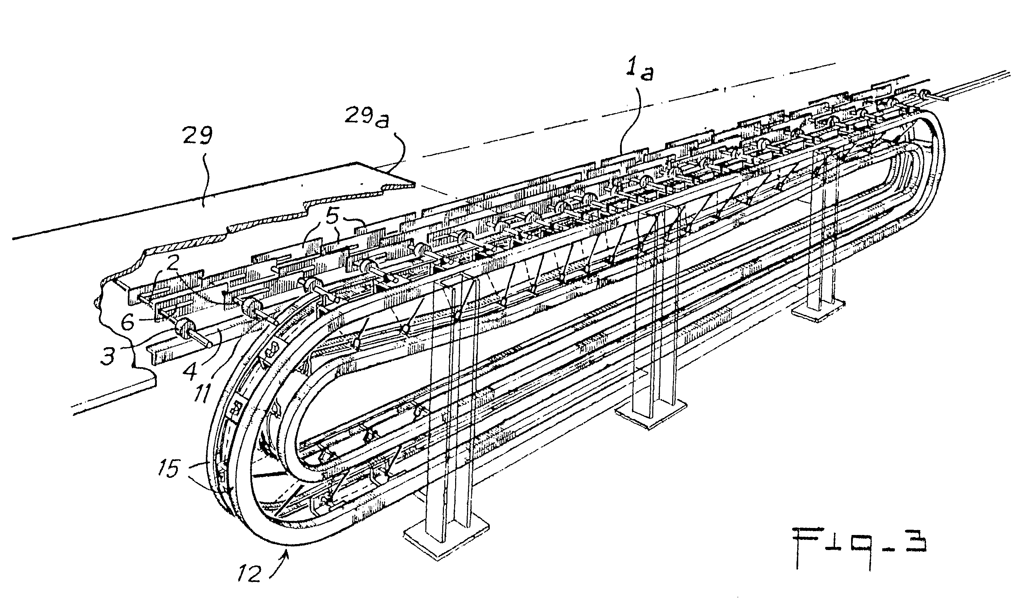

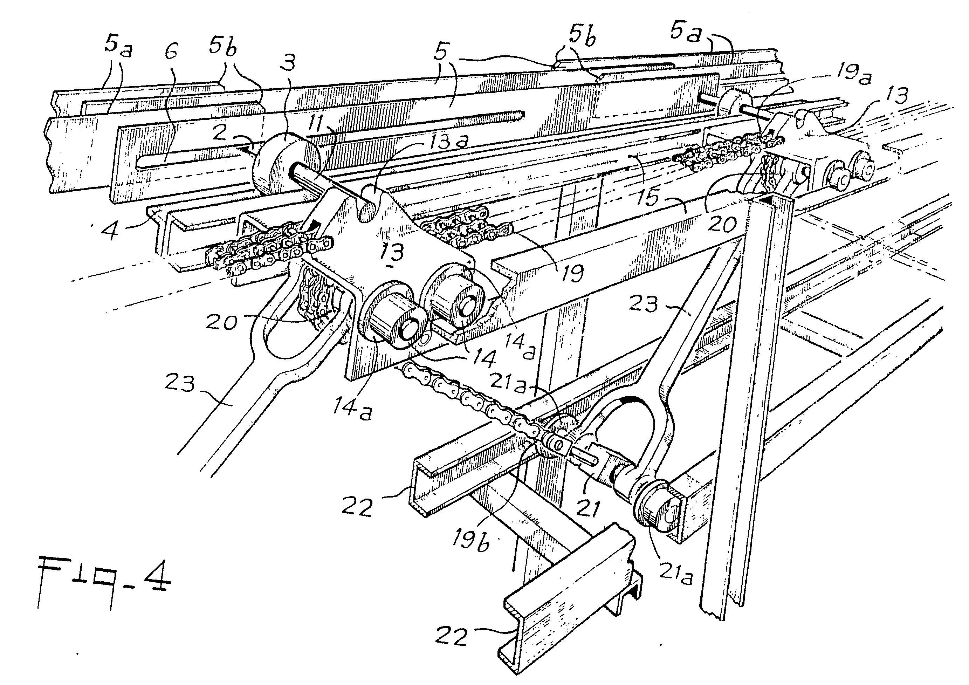

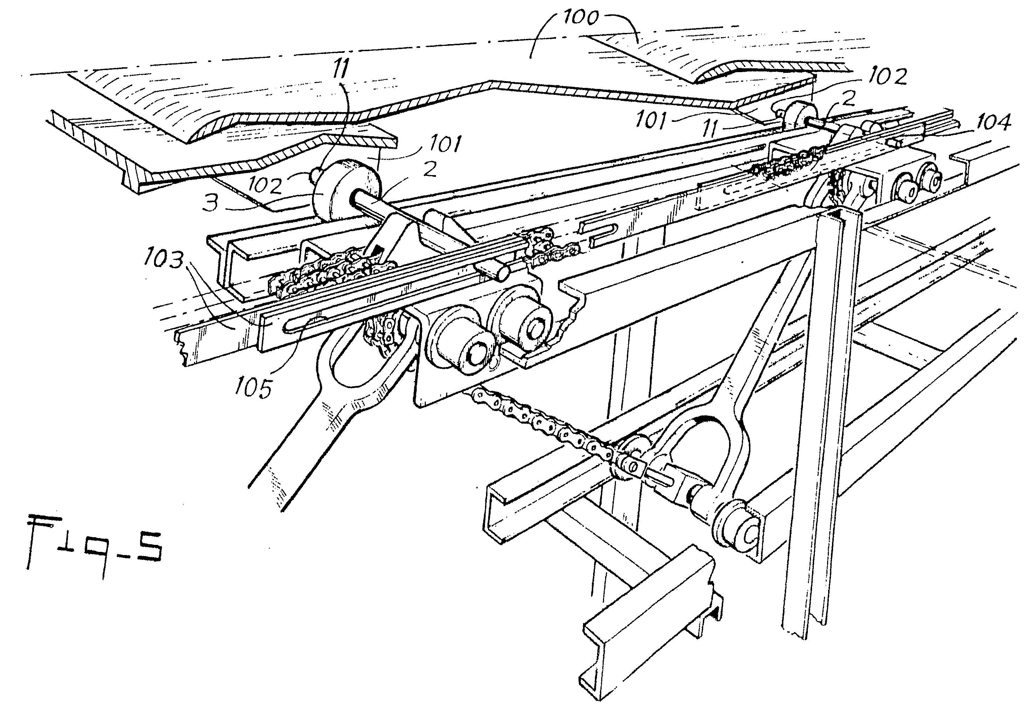

Entre ces zones, l'usager est transporté à vitesse accélérée V pouvant atteindre 12 km/h dans le cas où le plancher du trottoir serait constitué d'éléments à recouvrement multiple 100 comme représenté sur la figure 5.

Pour permettre un « peignage » du plancher du trottoir roulant, les lames 5 articulées sur un axe 2 sur deux du plancher dépassent en hauteur, par leur bord supérieur 5a, les lames 5 articulées sur les deux axes 2 voisins. De plus, comme on peut le voir sur la figure 4, le bord 5a, dépassant des lames 5 hautes, présente un biseau ou chanfrein 5b, à chaque extrémité.

Selon le mode de réalisation représenté sur la figure 5, les lames 5 sont remplacées par des éléments de plancher à recouvrement mutuel 100. Chaque élément 100 est monté sur une extrémité d'axe 11 respective par l'intermédiaire d'éléments verticaux de support 101 fixés sur la face inférieure desdits éléments 100 ; les éléments 101 sont chacun munis d'un perçage — ou palier — 102 traversé par l'extrémité d'axe 11 correspondante. Pour permettre la variation de l'espacement entre deux axes 2 voisins, entre la valeur minimale « m » et la valeur maximale « M », on utilise des lames 103 analogues aux lames 5 précédemment décrites. Comme les lames 5, les lames 103 sont, chacune, articulées en 104 sur un axe 2 respectif, et elles possèdent chacune, à leur extrémité opposée à l'articulation 104, une lumière longitudinale 105 qui est traversée par l'axe 2 précédent. Selon une variante, cette liaison mécanique par lames 103 des axes 2 peut être remplacée par une liaison par chaîne.

Pour permettre d'alléger la construction des dispositifs 7 et 9, il peut être avantageux de prévoir une liaison cinématique entre chacun des tambours 31 et 32 et, respectivement, un endroit du brin 1a situé en aval du dispositif 7, et un endroit du brin 1a situé en amont du dispositif 9.

**Revendications**

1. Transporteur sans fin à vitesses localement différentes, du type comportant : un ensemble linéaire sans fin (1) ayant un brin, dit de travail (1a), destiné à recevoir les corps à transporter, cet ensemble étant formé d'une succession d'éléments, dits de transport (2), d'espacements variables guidés suivant un trajet en boucle fermée ; au moins un dispositif de dilatation-contraction (7 ou 9) placé à poste fixe et destiné à faire varier l'espacement entre des éléments de transport voisins sur au moins un tronçon dit régulé du parcours dudit ensemble linéaire ; et des moyens moteurs (32, 33) pour entraîner ledit ensemble linéaire en défilement, caractérisé en ce que ledit dispositif de dilatation-contraction (7 ou 9) est distinct dudit ensemble linéaire sans fin (1) et est formé d'une suite d'éléments dits de préhension (13) guidés sur un trajet en boucle fermée dont un tronçon, dit de coïncidence, coïncide avec le tronçon régulé du parcours des éléments dudit ensemble linéaire, chaque élément de préhension (13) étant apte à saisir un élément de transport (2), chaque élément de préhension, dit premier élément, étant relié à l'un des éléments de préhension voisins, dit élément précédent, par un dispositif de liaison (19, 20, 21, 23) réglant, suivant un programme pré-établi, l'écartement entre ces deux éléments de préhension en fonction de la position dudit premier élément, de telle sorte que cet écartement diminue progressivement dans une première zone (17) du tronçon de coïncidence et augmente progressivement dans une deuxième zone (34) dudit tronçon, située en aval de la première zone.

2. Transporteur selon la revendication 1, caractérisé en ce que des moyens mécaniques de liaison (5 ou 103) sont prévus pour déterminer la valeur maximale « M » de l'espacement entre les éléments de transport (2) voisins, et en ce que cet espacement est maximal en dehors du tronçon régulé.

3. Transporteur selon l'une des revendications 1 et 2, caractérisé par deux dispositifs de dilatation-contraction (7, 9) associés chacun à un tronçon régulé respectif de l'ensemble linéaire sans fin (1), chacun de ces tronçons régulés étant placé à proximité d'une extrémité (8, 9) respective du brin de travail (1a) de l'ensemble linéaire sans fin (1).

4. Transporteur selon la revendication 1, caractérisé en ce que lesdits moyens moteurs comprennent un tambour d'extrémité (32) sur lequel est monté ledit ensemble linéaire sans fin (1), ce tambour étant entraîné positivement en rotation autour de son axe par un moteur (33).

5. Transporteur selon la revendication 1, caractérisé en ce que, entre lesdites première (17) et deuxième zones (34), se trouve une troisième zone (18) dans laquelle l'écartement entre les éléments de préhension (2) reste constant.

6. Transporteur selon l'une des revendications 1 et 2, caractérisé en ce que le dispositif de liaison comprend, de façon connue en soi, une chaîne (19) qui est attachée à une extrémité (19a) au premier élément (13), qui passe autour d'un pignon fou (20), de l'élément (13) précédent et qui est attachée à son autre extrémité (19b) sur un élément auxiliaire (21) guidé sur un trajet prédéterminé en boucle fermée, ce trajet suivant sensiblement le trajet des éléments de préhension, l'écartement entre les deux trajets étant non uniforme sur au moins une partie du tronçon de coïncidence, une bielle rigide (23) reliant, d'une part, l'élément auxiliaire (21) et, d'autre part, ledit premier élément (13).

7. Application du transporteur, selon l'une quelconque des revendications 1 à 6, à un trottoir roulant à vitesse variable formé par le brin supérieur (1a) d'un tapis sans fin constituant l'ensemble linéaire sans fin (1), dont les éléments de transport (2) sont des axes transversaux rigides, les éléments de préhension (13) étant constitués par une fourche dont l'ouverture (13a) est apte à recevoir un axe du tapis.

**Claims**

1. Endless conveyor with locally varying speeds, of the type comprising : a linear endless assembly (1) with a leading side, so-called working side (1a), intended to receive the bodies to be transported, said assembly being constituted by a succession of so-called conveying elements (2) at variable intervals one from the other, guided along a looped path ; at least one expanding-contracting means (7 or 9) which is fixed in position and designed to vary the interval between adjacent conveying elements over at least one section, so-called controlled section, of the path followed by said linear assembly ; and driving means (32, 33) driving the said linear assembly forward, characterized in that the said expanding-contracting means (7 or 9) is separate from the said endless linear assembly (1) and is formed by a succession of so-called gripping elements (13) guided along a looped path, of which a so-called coincidence section, coincides with the controlled section of the path followed by the elements of said linear assembly, each gripping element (13), so-called first element, being connected to one of the next gripping elements, so-called preceding element, by way of a connecting device (19, 20, 21, 23) controlling, in accordance with a pre-set programme, the interval between said two gripping elements in relation to the position of said first element, so that said interval reduces progressively in a first area (17) of the coincidence section, and increases progressively in a second area (34) of said section, situated downstream of the first area.

2. Conveyor according to claim 1, characterized in that mechanical connection means (5 or 103) are provided to determine the maximum value « M » of the interval between adjacent conveying elements (2) and in that said interval is maximum outside said controlled section.

3. Conveyor according to one of claims 1 and 2, characterized by two expanding-contracting devices (7, 9) each one associated to a respective controlled section of the endless linear assembly (1), each of said controlled sections being placed close to one respective end (8, 9) of the working side (1a) of the endless linear assembly (1).

4. Conveyor according to claim 1, characterized in that the said driving means comprise an end drum (32) on which is mounted said endless linear assembly (1), said drum being driven positively in rotation about its axis by a motor (33).

5. Conveyor according to claim 1, characterized in that, between said first (17) and second (34) areas, is situated a third area (18) in which the interval between the gripping elements (2) remains constant.

6. Conveyor according to one of claims 1 and 2, characterized in that the connection device comprises, in manner known per se, a chain (19) which is tied at one end (19a) to the first element (13), passes over an idle pinion (20) of the preceding element (13) and is tied by its other end (19b) to an auxiliary element (21) guided along a preset looped path, said path following substantially the path of the gripping elements, the interval between the two paths being uneven over at least part of the coincidence section, a rigid connecting rod (23) connecting, on the one hand, the auxiliary element (21) and on the other hand, said first element (13).

7. Application of the conveyor according to any one of claims 1 to 6, to a travelator of variable speed formed by the upper side (1a) of an endless belt constituting the endless linear assembly (1), of which the conveying elements (2) are rigid transverse axles, the gripping elements (13) being constituted by a fork the opening (13a) of which is adapted to receive one axle of said belt.

**Ansprüche**

1. Endlosförderer mit örtlich unterschiedlichen Geschwindigkeiten, umfassend ein lineares Endlossystem (1) mit einem Arbeitstrum (1a) zur Aufname der zu transportierenden Körper, welches System durch eine Folge von entlang einer geschlossenen Umlaufbahn in unterschiedlichen Abständen geführten Transportelementen (2) gebildet ist ; zumindest eine ortsfest aufgestellte Dilatations/Kontraktionseinrichtung (7 oder 9) zur Veränderung des Abstandes zwischen benachbarten Transportelementen an zumindest einem geregelten Abschnitt der Strecke des linearen Systems ; und Antriebsmittel (32, 33) zur Inumlaufsetzung des linearen systems, dadurch gekennzeichnet, daß die Dilatations/Kontraktionseinrichtung (7 oder 9) vom linearen Endlossystem (1) getrennt und durch eine Folge von Greifelementen (13) gebildet ist, die entlang einer geschlossenen Umlaufbahn geführt sind, von der ein Abschnitt, genannt Koinzidenzabschnitt, mit dem geregelten Abschnitt der Elemente des linearen Systems zusammenfällt, wobei jedes Greifelement (13) zur Erfassung eines Transportelements (2) ausgebildet ist und jedes Greifelement, genannt erstes Element, mit einem der benachbarten Greifelemente, genannt vorhergehendes Element, durch eine Verbindungs einrichtung (19, 20, 21, 23) verbunden ist, welche gemäß einem vorher erstellten Programm die Entfernung zwischen diesen beiden Greifelementen in Abhängigkeit von der Position des ersten Elements derart regelt, daß diese Entfernung in einer ersten Zone (17) des Koinzidenzabschnitts progressiv abnimmt und in einer zweiten, der ersten Zone folgenden Zone (34) progressiv zunimmt.

2. Förderer nach Anspruch 1, dadurch gekennzeichnet, daß mechanische Verbindungsmittel (5 oder 103) zur Bestimmung des Maximalwertes « M » des Abstandes zwischen den benachbarten Transportelementen (2) vorgesehen sind, und daß dieser Abstand außerhalb des geregelten Abschnitts am größten ist.

3. Förderer nach einem der Ansprüche 1 und 2, gekennzeichnet durch zwei Dilatations/Kontraktionseinrichtungen (7, 9), die jeweils mit einem geregelten Abschnitt des linearen Endlossystems (1) verbunden sind, wobei jeder dieser geregelten Abschnitte in der Nähe des jeweiligen Endes (8, 9) des Arbeitstrums (1a) des linearen Endlossystems (1) angeordnet ist.

4. Förderer nach Anspruch 1, dadurch gekennzeichnet, daß die Antriebsmittel eine Endtrommel (32) umfassen, auf der das lineare Endlossystem (1) angeordnet ist, welche Trommel durch einen Motor (33) in Rotation im positiven Sinn um seine Achse versetzt wird.

5. Förderer nach Anspruch 1, dadurch gekennzeichnet, daß sich zwischen der ersten (17) und der zweiten (34) Zone eine dritte Zone (18) befindet, in welcher der Abstand zwischen den Greifelementen (2) konstant bleibt.

6. Förderer nach einem der Ansprüche 1 und 2, dadurch gekennzeichnet, daß die Verbindungseinrichtung, wie an sich bekannt, eine Kette (19) umfaßt, die an einem Ende (19a) am ersten Element (13) befestigt ist, um ein bewegliches Ritzel (20) des vorhergehenden Elements (13) läuft und mit ihrem anderen Ende (19b) an einem auf einer vorbestimmten geschlossenen Umlaufbahn geführten Hilfselement (21) befestigt ist, welche Bahn im wesentlichen der Bahn der Greifelemente folgt, wobei der Abstand zwischen den beiden Bahnen zumindest über einem Teil des Koinzidenzabschnitts nicht einheitlich ist und ein starrer Lenker (23) einerseits das Hilfselement (21) und anderseits das erste Element (13) verbindet.

7. Verwendung des Förderers nach einem der Ansprüche 1 bis 6 für einen Rollsteig mit veränderbarer Geschwindigkeit, welcher durch das obere Trum (1a) eines das lineare Endlossystem (1) bildenden Transportbandes gebildet ist, dessen Transportelemente (2) starre Querachsen sind, dessen Greifelemente (13) durch eine Gabel gebildet sind, deren Öffnung (13a) für die Aufnahme einer Achse des Transportbandes ausgebildet ist.

**FIG.1**

**FIG. 2**

0 014 298

Fig-3

Fig. 4

Fig-5